# EUROPEAN PATENT APPLICATION

(11) **EP 1 350 773 A2**
(43) Date of publication of application: **08.10.2003**
(21) Application number: 03090073.2
(22) Date of filing: 19.03.2003
(51) Int. Cl.: C04B 16/06, E04C 5/07

(54) **Cement reinforcing thermoplastic resin reinforcement and reinforced cement mixtures**

(30) Priority: 03.04.2002 JP 2002101785; 03.04.2002 JP 2002101786
(71) Applicant: Diatexs Co., Ltd., Tokyo 101-0047 (JP)
(72) Inventor: Kawabata, Hideaki, Kurobe-shi, Toyoma-ken, 9380013 (JP); Yoshii, Masaru, Kurobe-shi, Toyoma-ken, 9380013 (JP); Yunoki, Tadashi, Kurobe-shi, Toyoma-ken, 9380013 (JP)
(74) Representative: Hengelhaupt, Jürgen D., Dipl.-Ing.

(57) **Abstract**

The present invention relates to cement reinforcing thermoplastic resin reinforcement that is free from uneven stretch, excellent in pullout resistance, highly effective in anchoring concrete, and shows evidence of an excellent reinforcing effect; and reinforced cement mixtures using such thermoplastic resin reinforcement, the cement reinforcing thermoplastic resin reinforcement being produced by means of cutting into pieces of a predetermined length filamentary bodies provided with numerous bulges at intervals in the longitudinal direction, the filamentary bodies being formed by uniaxially stretching long bodies made of thermoplastic resin and having numerous irregularities in the longitudinal direction.

## Description

### BACKGROUND OF THE PRESENT INVENTION

### Field of the invention

The present invention relates to cement reinforcing thermoplastic resin reinforcement and reinforced cement mixtures and, more particularly, to cement reinforcing thermoplastic resin reinforcement realizing crack-free cement products and reinforced cement mixtures using such thermoplastic resin reinforcement.

### Description of the related art

Cement products are broadly utilized as structures and/or materials for buildings and civil work including slate, concrete blocks, civil materials, etc. However, cement products, though they are high in compressive strength, are problematic in that they are subject to crazing or break due to bending stress, crack, etc.

Consequently, Concrete structures have been reinforced by arrangement of rebar. However, a serious problem is that rebar is so heavy that it requires more transportation cost, and rebar arrangement requires additional manpower costs. In an attempt to mitigate such problem, other methods for reinforcing concrete including blending of steel fiber, glass fiber, or thermoplastic resin fiber have so far been developed.

Steel fiber has certain strength, and is excellent in affinity for cement, but easy to separate from concrete because of its high gravity, causing difficulty in blending, transportation, etc. and in addition, has another problem of deterioration of reinforcing strength due to developing corrosion. Besides, projection of steel fiber out of concrete poses a problem of catching clothes or wearing vehicle tires.

Glass fiber is short of resistance to alkalinity of cement, which leads to fragility during concrete mixing.

Thermoplastic resin fiber such as polyethylene is cheap, strong, and tractable, but is hydrophobic and low in affinity and adhesiveness with cement, which results in reduction of the resistance to pullout from concrete and leads to failure in sufficiently realizing reinforcing effect.

It is effective to make thermoplastic resin fiber finer to increase its surface area in order to obtain a higher adhesiveness with cement, but finer fiber is liable to scatter, making it difficult to mix with cement, and gets entangled each other into fiber balls to make it difficult to disperse uniformly.

Formation on thermoplastic resin fiber of hooks that would anchor concrete has been proposed. The official gazette (publication of patent applications) No.2000-27026 includes a method for bonding filaments by, first, arranging plural filaments in parallel, secondly, uniaxially stretching them, and, thirdly, connecting spaced the parallel-arranged filaments in the longitudinal direction by local thermal deposition. However, thermal deposition of the stretched filaments could cause shrinkage break, so that a firm connection cannot be given to the filaments, which may allow pullout stresses to cause cleavage in and separation of connections, leading to degeneration of hitching effect.

Another proposal is formation of bulges on thermoplastic resin fiber at intervals. The official gazette No.2000-64116 includes a proposal for cement reinforcing thermoplastic resin reinforcement having polyethylene bulges that adhere by stretching compound polypropylene resin strand consisting of polypropylene core and polyethylene cover. However it is difficult to have bulges of desired size at intended intervals. In addition, there is a problem of adhesiveness between polypropylene fiber and the bulges made from polyethylene, which is different from the fiber in material. Exfoliation of the both materials may cause pullout of reinforcement out of concrete.

Accordingly, development of a concrete reinforcing thermoplastic resin reinforcement that is easy to produce, highly effective in hitching concrete, free from pullout of concrete, and also free from uneven stretch has been demanded.

### SUMMARY OF THE INVENTION

The first purpose of the present invention is to provide cement reinforcing thermoplastic resin reinforcement that is easy to produce and highly miscible with concrete as well as free from uneven stretch and excellent in tensile strength.

Another purpose of the present invention is to provide cement reinforcing thermoplastic resin reinforcement that is high in anchoring effect and excellent in reinforcing effect.

A further purpose of the present invention is to provide reinforced cement mixtures using the cement reinforcing thermoplastic resin reinforcement according to the present invention.

### BRIEF DESCRIPTION OF THE DRAWINGS

Fig. 1(A) is a perspective view showing the cement reinforcing thermoplastic resin reinforcement according to the present invention, and Fig.1 (B) is a perspective view of its long body.
Fig. 2 is a vertical section view showing an embodiment of the long body.
Fig. 3 is a perspective view showing another embodiment of the long body.
Fig. 4 is a plan view showing a further embodiment of the long body.
Fig. 5 is a vertical section view showing an embodiment of construction of the long body.
Fig. 6 is a vertical section view showing another embodiment of construction of the long body.
Fig. 7 is an illustration showing a method for forming irregularities on the long body made of thermoplastic resin.

### DESCRIPTION OF THE INVENTION AND PREFERRED EMBODIMENTS

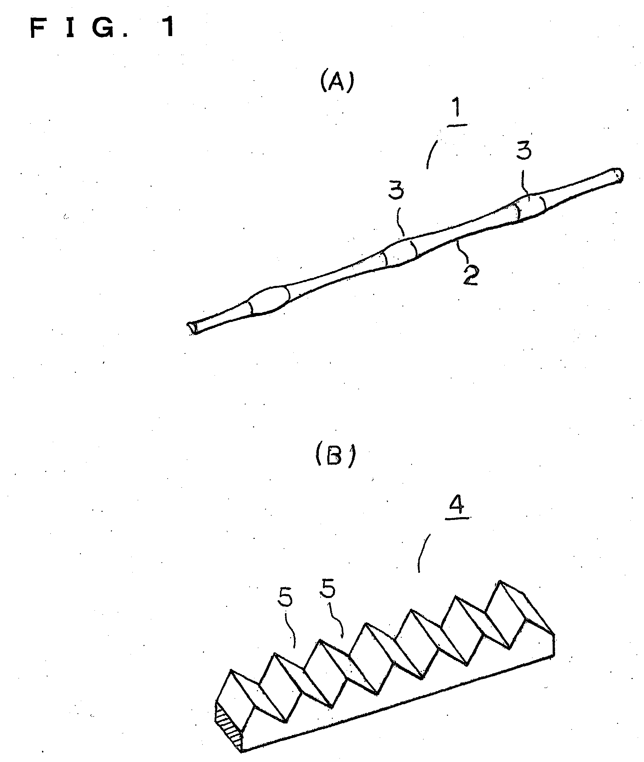

The cement reinforcing thermoplastic resin reinforcement 1 according to the present invention consists of a filamentary body 2 on which numerous bulges 3, 3 are formed spaced in the longitudinal direction as shown in Fig. 1(A).

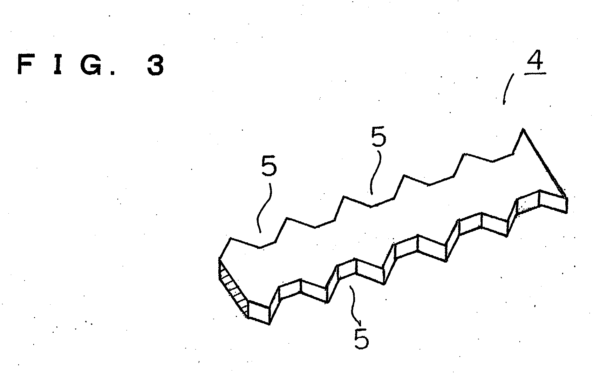

Such thermoplastic resin reinforcement 1 is formed by uniaxially stretching the long body 4 made of thermoplastic resin provided spaced with numerous irregularities 5, 5 in the longitudinal direction to form the filamentary body 2 having the bulges 3, and by cutting thus obtained filamentary body into pieces of a predetermined length. The numerous irregularities 5, 5 may be built on the long body 4 made of thermoplastic resin 4 as shown in Fig. 3.

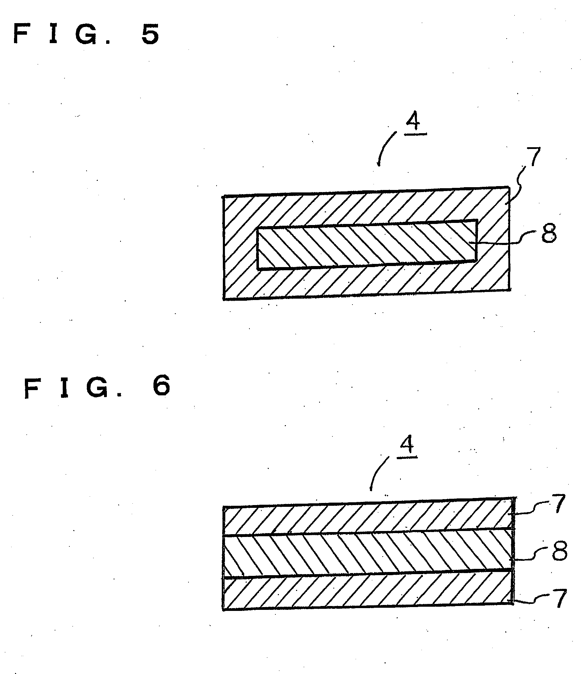

The long body 4 may be of single layer construction as shown in Fig. 5, and may also be of multi layer construction consisting of an outer layer 7 made of thermoplastic resin of higher-melting point and an inside layer 8 made of thermoplastic resin of lower-melting point. For the long body 4 of multi layer construction, the two layers have only to be so structured that the outer layer is positioned on the surface side of the long body 4, and, therefore, may be either of sheath core construction in which the outer layer 7 covers the inside layer 8 as shown in Fig. 6(A), or of sandwich construction in which the outer layer is mounted on both sides of the inside layer as shown in Fig. 6(B).

For the purpose of the present invention, whether melting point is higher or lower is judged in terms of comparison between the outer and the inside layers.

Crystalline resin of high stretch effect is preferable as the single layer body of the thermoplastic resin reinforcement 1 or the thermoplastic resin constituting the outer layer 7 of the multi layer body, and therefore, polyolefin such as high-density polyethylene, linear low-density polyethylene, polypropylene, and ethylene-propylene copolymer; polyester; polyamide; polyacrylonitrile; polyvinylidene chloride, etc are usable. In particular, polyolefin such as high-density polyethylene, linear low-density polyethylene, polypropylene, ethylene-propylene block copolymer, etc is preferable.

Furthermore, with a view to improving affinity of polyolefin for cement, denatured polyolefin containing units derived from polar monomer, which is obtained by copolymerization of polar monomer with olefin or by radical polymerization of polyolefin with polar monomer, can be used. As polar monomer to be co-polymerized with olefin, (metha)acrylic acid, (metha)acrylate, vinyl acetate, etc. can be used. As polar monomer to be radically polymerized with polyolefin, (metha)acrylic acid, (metha)acrylate, maleic acid, maleic anhydride, fumaric acid, itaconic acid, etc can be included.

Radical copolymerization can be obtained by kneading polyolefin with polar monomer in co-existence with ionizing agent such as peroxide at high temperatures, or by making them pyrogenetically react in a state of solution after they are dissolved in a solvent. The content of the polar monomer in the denatured polyolefin is preferably 0.1 - 10 weight percent, and the quantity of the denatured polyolefin to be combined is preferably within the range of 1 - 20 weight percent.

Also, high-pressure process low density polyethylene, linear low density polyethylene, polypropylene and ethylene-propylene block copolymer, ethylene-propylene copolymer, polyamide, polyacrylonitrile, polyvinylidene chloride, etc can be used as thermoplastic resin constituting the inside layer of the multi layer body, and thermoplastic resin of which melting point is lower, and preferably by 10°C or more, and more preferably by 20°C or more lower than that of the thermoplastic resin constituting the outer layer 7 is used. Among those aforementioned as usable as the thermoplastic resin constituting the inside layer of the aforementioned multi layer body, polyolefin such as low density polyethylene, linear low density polyethylene and polypropylene and, more particularly, ethylene series polymer is preferable.

Furthermore, the long body 4 made of thermoplastic resin according to the present invention may have inorganic filler added in order to improve affinity for cement. There is no specific restriction on the kind of inorganic filler, and inorganic filler already known as thermoplastic resin additive such as talc, clay, mica, calcium carbonate, barium sulfate, titanium oxide, zinc oxide, glass fiber, wollastonite, zeolite, aluminium hydroxide, magnesium hydroxide, calcium silicate, etc can be used. It is desirable to add inorganic filler together with modified polyolefin with acid.

Blending of inorganic filler makes the surface of thermoplastic resin reinforcement rough, and stretching of thermoplastic resin reinforcement generates crazing, both of which improve affinity for cement. When the long body 4 is of multi construction comprising the outer layer 7 and the inside layer 8, inorganic filler is typically added to the outer layer 7. Inorganic filler may be added to the inside layer 8 in addition to the outer layer 7. The quantity of the inorganic filler to be blended is considered to be around 3 to 60 weight percent and, preferably around 5 to 40 weight percent.

When emphasis is placed on tensile strength in the present invention, it is possible to cover the long body 4 with thermoplastic resin blended with inorganic filler instead of addition of inorganic filler to the thermoplastic resin constituting the long body 4. This is a desirable method.

The thermoplastic resin constituting the cement reinforcing thermoplastic resin reinforcement 1 may be blended, as needed, with various kind of additives such as antioxidants including phenol series, organic phosphite series, organic phosphorous compounds like phosnite, and thioether series; antistatic agents such as nonionic series, cationic series, and anionic series; dispersing agents such as bis-amide series, wax series, and organic metal bases; chlorine supplements such as alkaline-earth metal salt carboxylate; lubricants such as amide series, wax series, organic metal salt, and ester series; metal deactivators such as hydrazine series and amine acid series; organic pigments; organic pigments, etc.

These mixtures are appropriately proportionated as required, and mixed or hot-kneaded in a Henschel mixer, Supermixer, V-blender, tumbler mixer, ribbon mixer, Bambery mixer, kneader-blender, or single- or twin-screw extruder, and then formed into the long body 4 made of the thermoplastic resin.

In this case, the long body 4 made of thermoplastic resin takes the form of a wide sheet, which is, then, slit into the long bodies 4 at a time, or takes the form of strands that correspond to the filamentary bodies 2 through extrusion. The strands, if selected, can take the form of a rectangular ribbon, a circle, an oval, a triangle, or an irregular form of star.

The long body 4 made of thermoplastic resin of multi layer construction may be assembled by any method selected from those known including dry or thermal lamination of pre-formed sheets intended for the inside layer 8 and the outer layer 7 into multi layer construction; coating of the thermoplastic resin intended for the outer layer 7 on the sheet intended for the inside layer 8; interposing of the thermoplastic resin intended for the inside layer 8 between pre-formed sheets intended for the outer layer 7 through extrusion; or multi-layer co-extrusion molding laminated bodies by extrusion, but what is preferable from the standpoint of workability, cost, and adhesiveness among layers of the product is the multi-layer co-extrusion obtaining laminated bodies of the inside layer 8 and the outer layer 7 in a single stage by extrusion molding. Sheath core construction is typically obtained by the co-extrusion method.

The long body 4 made of thermoplastic resin is provided in the longitudinal direction with numerous irregularities 5, 5 on the strand, if the long body is a strand, and on the sheet, if the long body is a sheet, before it is slit.

The irregularities 5, 5, which are intended to add variety to the cross section area of the long body 4, can be formed in the direction of thickness as well as width. Presence of the inside layer 8 has a significant effect on formation of the irregularities in the direction of thickness.

As shown in Fig. 1(B), the regularities in the direction of thickness can be built in great numbers by forming ditches on the long body 4 in the crossing direction at a regular pitch in the longitudinal direction of the long body 4. However, the irregularities 5, 5 are intended to add variety to the cross section of the long body 4, so that the irregularities 5, 5 have not to be crossing through the long body 4, and may take the form of apertures dug in the central part of the long body 4 and going either all the way through or halfway. Therefore, formation of such apertures shall be treated as that of irregularities 5 in the present invention.

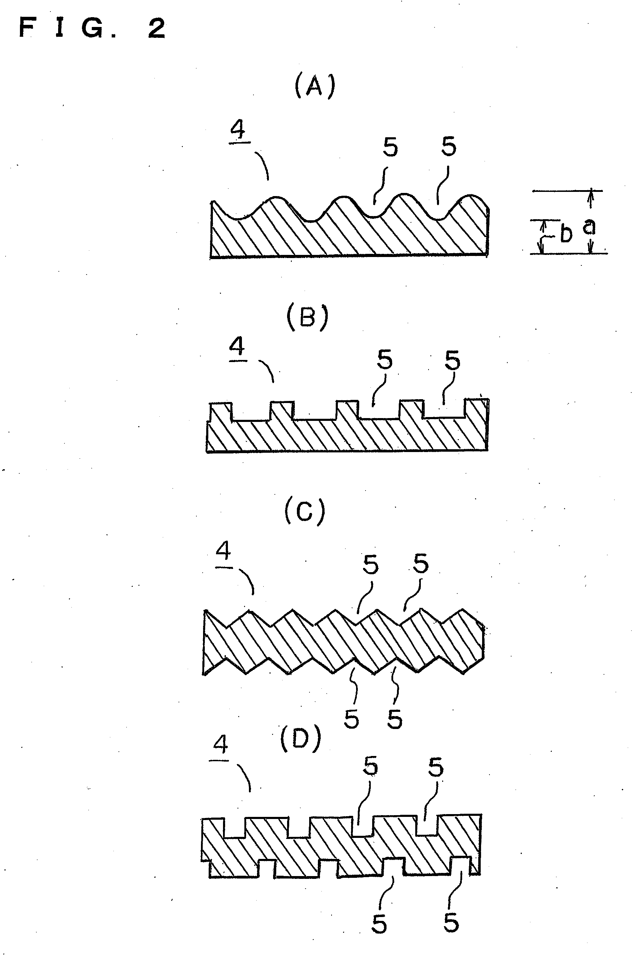

There is no specific restriction on shapes of the irregularities 5, 5; they may have the form of triangle at their cross section as shown in Fig. 1(B), wave as shown in Fig. 2(A), or concave at their cross section as shown in Fig. 2(B). Furthermore, the irregularities 5, 5 may be built in the direction of thickness either only on one side of the long body 4 made of thermoplastic resin or on both sides of the long body 4 made of thermoplastic resin as shown in Fig. 2(C). In case the irregularities 5, 5 are built in the direction of thickness on both sides, the irregularities 5, 5 of the long body 4 made of thermoplastic resin may be disposed either oppositely as shown in Fig. 2(C) or bias as shown in Fig. 2(D) on both sides.

A desirable proportion of thickness of the thicker part "b" to the thinner part "a" of the long body 4 is 1.1 through 20.0:1 and, more preferably, 1.5 through 10.0:1.

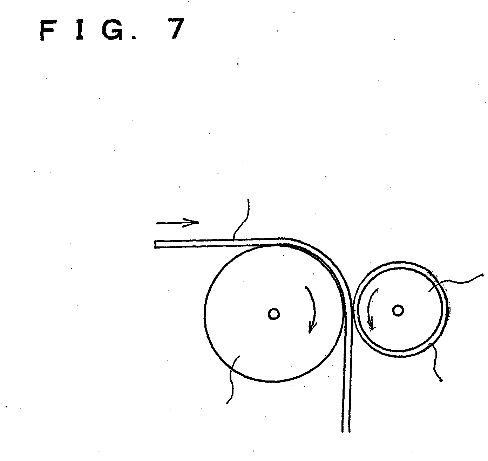

The irregularities 5, 5 can be built on the long body 4 made of thermoplastic resin, for example, by pressing the long body 4 made of thermoplastic resin with knurling rolls 11 having irregularities on the surface as shown in Fig. 7, but there is no limitation on how to build the regularities 5, 5. In this connection, 12 are metal rolls.

The long body 4 made of thermoplastic resin given the irregularities 5, 5 is slit into slender tapes, if required. Any width of the long body 4 can be selected, while the width is considered to be typically 5mm to 30mm and, preferably around 2.0mm to 10mm; the thickness -is considered to be typically 0.2mm to 5mm and, preferably around 0.5mm to 3mm; and the interval between irregularities 5 is considered to be typically 0.5mm to 5mm and, preferably around 1.0mm to 3mm.

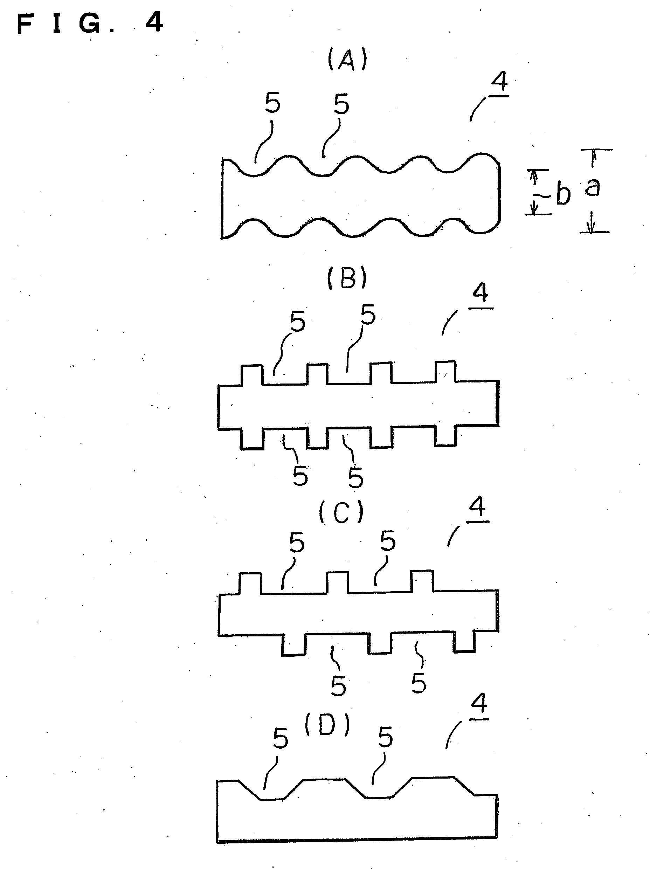

In the present invention, the irregularities 5 may be built in the direction of width in whichever shape: trapezoid at the part of cutout as shown in Fig. 3, wave as shown in Fig. 4(A), square as shown in Fig. 4(B), and triangle.

The cutouts 5, 5 may be made in the direction of thickness either on the both sides of the long body 4, as shown in Fig. 4(A) and (B) or on one side of the long body 4, as shown in Fig. 4(D). In case of making cutouts 5, 5 in the direction of thickness on the both sides of the long body, the cutouts may be disposed in the direction of thickness either oppositely as shown in Fig. 4(A) and (B) or bias on the right and left sides, as shown in Fig. 4(C).

In order to build irregularities 5, 5 in the direction of width, a cutting roll equipped with cutting blades having the intended shape of irregularities may be used instead of the knurling roll shown in Fig. 7.

Any width can be selected about the long body 4 having cutouts 5, 5 in the direction of width, while the width is considered to be typically 0.5 to 30mm and, preferably around 2.0mm to 10mm, at the widest part "a"; the thickness is considered to be typically 0.2mm to 5mm and, preferably around 1.0mm to 3mm; the interval between cutouts 5 is considered to be typically 0.5mm to 5mm and, preferably about 1.0mm to 3mm; and a desirable proportion of width of the widest part "a" to the slenderest part "b" is considered to be typically 1.1 through 10.0:1 and, more preferably, 1.5 through 8.0:1.

The thus obtained long body 4 is stretchn into a filamentary body 2. Stretching is madeby using a hot roller, a hot plate, or a hot wind oven. A desirable stretch ratio is 3 through 12:1 and, more preferably, 5 through 10:1.

In the present invention, the long body 4 of multi layer construction consists of the outer layer 7 made of thermoplastic resin with higher melting point and the inside layer 8 made of thermoplastic resin with lower melting point. This construction makes it possible that while the long body 4 is heated to get stretchn and the temperature of the outer layer 7 reaches the point suitable for stretching, the temperature of the inside layer 8 also reaches the point where stretching is possible even at the part of larger cross section, i.e. thicker part or wider part of the long body 4, and the inside layer 8 will not be left as it is. It means that it is easy to obtain uniform stretch without unevenness.

It is desirable to give a treatment to the filamentary body 2 according to the present invention so as to make it hydrophilic. As means to make it hydrophilic, corona discharge, electron beam irradiation, flaming, etc. are available, and application of surface active agents such as anionic surface active agent, cationic surface active agent, nonionic surface active agent, etc, and acrylic resins, polyvinyl alcohol, silane coupling agent such as γ-glycideoxypropyl trimethoxysilane, or titanate series coupling agent, etc. can be also a means to make the filamentary body hydrophilic.

The filamentary body 2 is cut into short tips of predetermined length, which represent the cement reinforcing thermoplastic resin reinforcement 1 provided with bulges 3, 3 at intervals in the longitudinal direction.

In the present invention, the desirable predetermined length is 5 to 100mm and, more preferably, within the range between 10 and 60mm. If the thermoplastic resin reinforcement is shorter than 5mm, its reinforcing effect declines, and if it is longer than 100mm, it does not smoothly mix with cement. The cement reinforcing thermoplastic resin reinforcement is so cut-formed as to have two or more bulges 3 and, more preferably, three or more bulges 3 on one piece of the reinforcement.

The thermoplastic resin reinforcement 1 according to the present invention is mixed with cement into mortar or concrete. The applicable cements are hydraulic cements such as portland cement, portland blast furnace cement, silica cement, flyash cement, white portland cement and alumina cement; and air-hardening cements such as gypsum and lime.

The cements can be combined with aggregates such as gravel, rubble, slag and other coarse aggregates, and river sand, pit sand, quartz sand, glass powder, and other fine aggregates such as manmade fine aggregates. Furthermore, the cements may have coloring agents or flow improvers added as additives, if necessary.

Combination of the thermoplastic resin reinforcement according to the present invention with cement, coarse aggregates, fine aggregates, and other additives, as required, constitutes a cement mixture.

When cement, coarse aggregates, fine aggregates, and additives are mixed in required proportion, blended with the thermoplastic resin reinforcement and water, and kneaded, the thermoplastic resin reinforcement disperses uniformly into the cement mixture without forming fiber balls, since the thermoplastic resin reinforcement has high stiffness. The foregoing kneaded cement mixture becomes a cement product, if given a form or shape.

The thermoplastic resin reinforcement according to the present invention is highly effective in anchoring concrete owing to bulges mounted on the filamentary body at intervals in the longitudinal direction, and highly resistant to pullout thanks to even stretch of layers constituting the thermoplastic resin reinforcement by adopting the inside layer made of thermoplastic resin with lower-melting point, and therefore by getting rid of shortage of heating at the thick part even if the proportion of thickness of a thick part to a thin part is large. These advantages make it possible to realize a cement reinforcing thermoplastic resin reinforcement that is practical, highly pullout-resistant, and excellent in reinforcing effect.

### EXAMPLES

The present invention will next be described in more detail by means of examples, which should not be construed as limiting the present invention.

### (Example 1)

### (Testing method)

1. Pullout strength: a specimen made of cement that had been solidified in the state of concrete with 15mm long reinforcement made of synthetic resin buried inside, and cured underwater for 28 days was set on a testing machine, and tested on the load for pulling out fiber, and the result was determined as pullout strength.

| | | |
|---|---|---|
| 2. | Bending strength | according to JIS A1106 |
| 3. | Toughness | according to JSCE G552 |
| 4. | Compressive strength | according to A1108 |

### (Example 1)

With polypropylene (Nippon Polychem's FY-6HA) as core material, and polypropylene (Nippon Polychem's Polypan 3286) containing calcium carbonate by 10 weight percent as the outer layers on the both sides, a triple layer sheet (outer layer/core material/outer layer = 1/8/1) was formed through co-extrusion by the T-die molding method by means of a melting extruder, and the thus formed sheet was slit by means of laser, and provided with ditch-like notches as shown in Fig. 1(B) extending in the direction of width by means of a knurling roll.

The long body was 3.0mm in width, 1.0mm in maximum thickness, 1.7:1 in proportion of thickness of thick part "a" to thin part "b", and 1.7mm in notch pitch.

The obtained long body was stretchn to a length seven times as long as the original one, and then, underwent heat treatment for relaxation of 6% in a 140°C hot wind oven into a stretchn filamentary body.

The filament body was made hydrophilic on the surface by coating in 1.0 weight percent PEAKLON 700 solution, and cut to get 30mm long cement reinforcing thermoplastic resin reinforcement pieces.

Secondly, the following materials were kneaded for 90 seconds by 60L per batch with a 60L dual shaft forced type kneader-mixer, and then had the cement reinforcing thermoplastic resin reinforcement added by 0.2 weight percent, and were kneaded again for 90 seconds:

### Proportioning:

| | |
|---|---|
| Portland cement (Denka cement) | 275 weight |
| Fine aggregates (river sand) | 873 weight |
| Coarse aggregates (river gravel) | 1000 weight |
| Water | 165 weight |

The kneaded concrete was discharged onto a kneading plate, and processed into a specimen. The method for making the specimen was according to Japan Society of Civil Engineers Standard, "How to make specimens for testing the strength and toughness of steal fiber reinforced concrete" (JSCE F552). The specimen was taken out of the frame after 24 hours, and cured underwater for the concrete age of 28 days. As the result, the pullout strength of the reinforcement was 70.0N; the bending strength of the concrete product - 5.94N/mm²; toughness - 11.42N/mm²; and compressing strength - 49.8N/mm².

### (Comparison 1)

A comparison test was conducted in the same manner as the example 1 except only that notches were not given to the formed long body made of the thermoplastic resin. As the result, the pullout strength of the reinforcement was 43.2N; the bending strength of the concrete product - 5.58N/mm2; toughness - 4.62N/mm²; and compressing strength - 49.4N/mm².

### (Example 2)

With polypropylene (Nippon Polychem's FY-6HA) as core material, and polypropylene (Nippon Polychem's Polypan 3286) containing calcium carbonate by 10 weight percent as the outer layers on the both sides, a triple layer sheet (outer layer/core material/outer layer = 1/8/1) was formed through co-extrusion by the T-die molding method by means of a melting extruder, and then, cut and provided with numerous cutouts in the direction of thickness on the both side fringes by means of cutting rolls into long bodies.

The filamentary bodies were 1.3mm in thickness, maximum 3.2mm and minimum 2.5 in width, and 1.5mm in cutout pitch.

The obtained long bodies were stretchn to a length seven times as long as the original ones, and then underwent heat treatment for relaxation of 6% in a 140°C hot wind oven into stretched filamentary bodies.

The filamentary bodies were made hydrophilic on the surface by coating in 1.0 weight percent PEAKLON 700 solution, and cut to get 30mm long cement reinforcing thermoplastic resin reinforcement pieces, which were blended with concrete and set in the same manner as the example 1, and then tested on the strengths. As the result, the pullout strength of the reinforcement was 68.9N; the bending strength of the concrete product - 5.94N/mm²; toughness - 11.22N/mm²; and compressing strength - 49.8N/mm².

### (Example 3)

A compound strand consisting of the inside layer of 0.5mm thick and 2.5 wide made from high-pressure process polyethylene (Nippon Polychem's product) and the outer layer of 0.25mm thick made from polypropylene (Nippon Polychem's FY-6HA) covering the inside layer was formed by means of co-extrusion, and provided with irregularities of notch shape extending in the direction of width by means of knurling rolls into a long body as shown in Fig. 1(B).

The long body was 3.0mm in width, 1.0mm in maximum thickness, 1.7:1 in proportion of thickness of thick part "a" to thin part "b", and 1.7mm in notch pitch.

The obtained long body was stretchn to a length seven times as long as the original one on a hot plate of 110°C to 120°C, and then, underwent heat treatment for relaxation of 6% in a 140°C hot wind oven into a stretched filamentary body, and tested on stretching conditions. As the result, the filamentary body was stretchn uniformly all the way long, and no uneven stretch was detected.

## Claims

1. Cement reinforcing thermoplastic resin reinforcement by means of cutting into pieces of a predetermined length filamentary bodies provided with numerous bulges at intervals in the longitudinal direction, the filamentary bodies being formed by uniaxially stretching long bodies made of thermoplastic resin and having numerous irregularities in the longitudinal direction.

2. Cement reinforcing thermoplastic resin reinforcement according to Claim 1, produced by means of uniaxially stretching long bodies made of thermoplastic resin provided with numerous irregularities in the direction of thickness on their either one or both sides by means of compression of strands made of thermoplastic resin with rolls having numerous irregularities on the rolling surface.

3. Cement reinforcing thermoplastic resin reinforcement according to Claim 1, produced by means of uniaxially stretching long and slender bodies made of thermoplastic resin provided with numerous irregularities formed through slitting a sheet that is given numerous notches extending to the direction of width by means of compression of the sheet made of thermoplastic resin with rolls having numerous irregularities on the rolling surface.

4. Cement reinforcing thermoplastic resin reinforcement according to Claim 1, produced by means of uniaxially stretching long bodies made of thermoplastic resin provided with numerous irregularities in the direction of width by means of cutting a sheet made of thermoplastic resin with cutting rolls having cutting blades refracting in the direction of width.

5. Cement reinforcing thermoplastic resin reinforcement according to any of Claims 1 to 4, produced by means of uniaxially stretching long bodies made of multi layer thermoplastic resin consisting of an outer layer of higher melting point thermoplastic resin and an inside layer of lower melting point thermoplastic resin.

6. Cement reinforcing thermoplastic resin reinforcement according to any of Claims 1 to 5, consisting of long bodies made of thermoplastic resin containing inorganic filler.

7. Cement reinforcing thermoplastic resin reinforcement according to any of Claims 1 to 6, produced by using long bodies made of thermoplastic resin consisting of polyolefin.

8. Cement reinforcing thermoplastic resin reinforcement according to any of Claims 1 to 6, produced by using long bodies made of thermoplastic resin consisting of denatured polyolefin containing units derived from polar monomer or polyolefin combined with denatured polyolefin.

9. Reinforced cement mixtures consisting of cement, aggregates, and the cement reinforcing thermoplastic resin reinforcement according to any of claims 1 to 8.
